# EUROPÄISCHE PATENTSCHRIFT

(11) **EP 3 578 860 B1**
(45) Veröffentlichungstag und Bekanntmachung des Hinweises auf die Patenterteilung: **31.01.2024**
(21) Anmeldenummer: 19175220.3
(22) Anmeldetag: 17.05.2019
(51) Int. Cl.: F16K 27/07, F16K 1/44, F16K 39/02, F17C 13/04, F17C 13/00

(54) **TANKVENTIL UND TANK MIT EINEM DERARTIGEN VENTIL**
TANK VALVE AND TANK WHICH INCLUDES SUCH A VALVE
SOUPAPE DE RÉSERVOIR ET RÉSERVOIR DOTÉ D'UNE TELLE SOUPAPE

(30) Priorität: 08.06.2018 DE 102018113748
(43) Veröffentlichungstag der Anmeldung: 11.12.2019
(73) Patentinhaber: Leinemann GmbH & Co. KG, 38110 Braunschweig (DE)
(72) Erfinder: KOSMEHL, Ralf, 31275 Lehrte (DE); HELMSEN, Frank, 31228 Peine (DE); SCHAPER, Thorsten, 38110 Braunschweig (DE); DAVIES, Michael, 31141 Hildesheim (DE); HEIDERMANN, Thomas, Dr., 38530 Didderse (DE)
(74) Vertreter: Gramm, Lins & Partner Patent- und Rechtsanwälte PartGmbB

(56) Entgegenhaltungen:
- EP-A1- 0 645 562
- WO-A1-2012/109799
- WO-A1-2017/137961
- CN-U- 204 358 117
- DE-C- 291 099
- US-A- 3 981 325
- US-A- 4 009 862
- US-A- 4 777 975
- US-B2- 8 646 478

## Beschreibung

Die Erfindung betrifft ein Tankventil mit einem Ventilsitz und einem Ventilteller, der relativ zu dem Ventilsitz entlang einer Verschieberichtung in eine Schließstellung, in der das Tankventil geschlossen ist, und in eine Durchflussstellung verschiebbar ist. Die Erfindung betrifft zudem einen Tank für verflüssigte Gase mit einem derartigen Ventil.

In einer Vielzahl unterschiedlicher technischer, industrieller und sonstiger Anwendungen werden heute verflüssigte Gase, beispielsweise verflüssigter Stickstoff, verflüssigter Ammoniak, verflüssigtes Argon und andere Gase verwendet. Diese werden unterhalb Ihrer Siedetemperatur in Tanks gelagert, die mehrere hundert Kubikmeter Fassungsvermögen haben können. Diese Tanks verfügen oftmals an ihrer Unterseite oder im unteren Bereich Ihrer Seitenwand über wenigstens eine Auslassleitung, aus der bei Bedarf das flüssige Gas abgelassen werden kann. Im Innern des Tankvolumens befindet sich das innere Ende dieser Auslassleitung, das mit einem Tankventil versehen ist. Sollte die Auslassleitung außerhalb des Tanks beschädigt sein oder beschädigt werden, kann durch Schließen des Ventils ein unkontrollierter Austritt des flüssigen Gases verhindert werden.

Bei dem Tankventil handelt es sich in der Regel um ein Ventil, das einen ringförmigen Ventilsitz und einen tellerförmigen Ventilteller aufweist. Unter einem Ventilsitz wird im Zusammenhang mit der vorliegenden Erfindung ein unbeweglicher Anteil des Ventils verstanden, während der Ventilteller relativ zum Ventilsitz verschieblich ausgebildet ist. Er kann von Ventilsitz entfernt werden und befindet sich dann in einer Durchlassstellung, in der das Tankventil geöffnet ist. Der Ventilteller ist auch in die entgegengesetzte Richtung verschiebbar bis er am Ventilsitz anliegt, so dass das Tankventil geschlossen ist. Ein solches Tankventil ist beispielsweise aus der US 8 646 478 B2, der DE 10 2013 110 619 B3 oder der DE 20 2015 104 520 U1 bekannt.

Um den Ventilteller des Tankventils aus der Schließstellung in die Durchflussstellung zu bringen und in dieser zu halten, ist eine Zugvorrichtung, beispielsweise ein Zugseil, vorhanden, das zum Dach des Tanks geführt wird. An der Außenseite des Tanks ist oftmals durch eine Pneumatik oder eine Hydraulik, das Ende des Zugseils festgelegt, wodurch der Ventilteller des Tankventils in der Durchlassstellung gehalten wird.

Da sich die Auslassleitung im Boden oder im unteren Bereich der Seitenwand des Tanks befindet, ist sie in der Regel von verflüssigtem Gas umgeben und nicht zugänglich. Das Tankventil muss folglich bei entsprechend tiefen Temperaturen funktionieren.

Soll ein Tankventil aus dem Stand der Technik geschlossen werden, ist es oftmals ausreichend, die Arretierung des Zugseils am Dach des Tanks zu lösen, wodurch der Ventilteller der Schwerkraft und dem hydrostatischen Druck des auf ihm lastenden flüssigen Gases folgend nach unten bewegt wird und in die Schließstellung gelangt. Dabei kommt es insbesondere gegen Ende des Hubweges, bei dem die Ventilöffnung zwischen dem Ventilteller und dem Ventilsitz immer kleiner wird, zu einer starken Druckdifferenz zwischen dem Bereich oberhalb des Ventiltellers und unterhalb des Ventiltellers, wodurch eine starke Kraft auf den Ventilteller wirkt, die ihn immer weiter auf den Ventilsitz zu beschleunigt. Der Ventilteller schlägt ungebremst auf den Ventilsitz auf, wobei auf ihm der hydrostatische Druck des oberhalb angeordneten flüssigen Gases lastet. Dieser kann einem Gewicht von mehreren Tonnen entsprechen. Der Ventilteller muss folglich einerseits so ausgebildet sein, das er den Aufprall auf den Ventilsitz unbeschadet übersteht und andererseits durch die Zugeinrichtung aus der Schließstellung wieder in die Durchlassstellung bringbar ist. Dazu muss durch die Zugeinrichtung der hydrostatische Druck des flüssigen Gases überwunden werden, so dass eine Zugkraft aufgebracht werden muss, die ausreichend ist, mehrere Tonnen anzuheben. Diese Kraft muss in das Dach des Tanks eingeleitet werden, welches daher sehr stabil ausgebildet sein muss.

Andere Doppelsitz-Ventile sind beispielsweise aus der WO 2012/109799 A1, der EP 0 645 562 A1, der DE 291 099 C und der US 4 777 975 A bekannt. In allen Ausführungsformen sind die beiden Ventilsitze ringförmig ausgebildet und kommen mit ebenfalls ringförmigen Kontaktbereichen der jeweiligen Ventilteller in Kontakt.

Der Erfindung liegt die Aufgabe zugrunde, ein Tankventil der hier beschriebenen Art so zu verbessern, dass diese Nachteile vermindert werden.

Die Erfindung löst die gestellte Aufgabe durch ein Tankventil gemäß Anspruch 1.

Der ringförmige zweite Anteil des Ventilsitzes entspricht dem Ventilsitz aus dem Stand der Technik. Er umgibt eine Ausströmöffnung, die im montierten Zustand des Tankventils mit einer Auslassleitung des Tanks verbunden ist. Das Medium, das in dem Tank gespeichert ist, kann den Tank durch diesen zweiten ringförmigen Anteil des Ventilsitzes hindurch verlassen. Ringförmig bedeutet dabei nicht zwangsläufig kreisringförmig. Selbstverständlich kann der zweite Anteil auch oval oder in einer anderen Form ausgebildet sein. Vorzugsweise findet der Kontakt zwischen dem zweiten Teil des Ventilsitzes und dem zweiten Kontaktbereich des Ventiltellers entlang einer geschlossenen Kontur statt.

Auch der Kontakt zwischen dem ersten Kontaktbereich des Ventiltellers und dem tellerförmigen ersten Anteil des Ventilsitzes findet entlang einer geschlossenen Kontur, beispielsweise eines Ringes oder Kreisringes statt. Vorzugsweise bedeutet die Tellerförmigkeit des ersten Anteils des Ventilsitzes lediglich, dass der Bereich innerhalb dieser Kontur keine oder nahezu keine Öffnungen aufweist.

Der Erfindung liegt die Erkenntnis zugrunde, dass die bereits beschriebenen Nachteile bei Tankventilen im Stand der Technik durch die relativ große Fläche des Ventiltellers hervorgerufen werden, die sich senkrecht zur Verschieberichtung erstreckt.

Auf diese Fläche wirkt der hydrostatische Druck in Richtung der Verschieberichtung oder entgegengesetzt dazu, der zum Öffnung des Ventils, also zum Verschieben des Ventiltellers aus der Schließstellung in die Durchflussstellung, überwunden werden muss und der bei einer entgegengesetzten Bewegung für die große Kraft sorgt, die auf dem Ventilteller wirkt. Erfindungsgemäß ist jedoch vorgesehen, dass diese zum vollständigen Verschließen des Ventils weiterhin notwendige Fläche Teil des Ventilsitzes ist und den ersten tellerförmigen Anteil bildet. Auf diese Weise wird erreicht, dass der Ventilteller selbst nicht mehr tellerförmig ausgebildet ist, wobei er weiterhin als Ventilteller bezeichnet wird. Die in Richtung der Verschieberichtung projizierte Fläche des erfindungsgemäßen Ventiltellers ist gegenüber Ventiltellern aus dem Stand der Technik deutlich verkleinert, wodurch die Nachteile aus dem Stand der Technik reduziert werden.

Der Ventilteller verfügt über einen rohrförmigen Mantel, der den ersten Kontaktbereich mit dem zweiten Kontaktbereich verbindet. Der zweite Kontaktbereich befindet sich dabei an einem Ende des rohrförmigen Mantels. In der Schließstellung des Ventiltellers liegt dieser zweite Kontaktbereich am zweiten ringförmigen Anteil des Ventilsitzes an. Wird der Ventilteller aus dieser Schließstellung in die Durchflussstellung verschoben, vergrößert sich ein Abstand zwischen dem zweiten Kontaktbereich und dem zweiten ringförmigen Anteil des Ventilsitzes und es entsteht vorzugsweise ein Durchflussspalt, durch den der Großteil des durch den ringförmigen zweiten Teil des Ventilsitzes abfließenden Mediums in das Ventil eintritt.

Der erste Kontaktbereich ist an einem nach innen umgeschlagenen Ende des Mantels angeordnet. In diesem Bereich ist der Mantel folglich mit einem U-förmigen Querschnitt ausgebildet, wobei ein Schenkel des U, nämlich der radial äußere Schenkel, deutlich länger ausgebildet ist als der radial innere Schenkel. An dem Ende des radial äußeren Schenkels befindet sich zweite Kontaktbereich, während der erste Kontaktbereich an dem nach innen umgeschlagenen Ende, also dem radial inneren Schenkel, angeordnet ist.

Alternativ kann der erste Kontaktbereich auch an einem nach radial innen ragenden Vorsprung des Mantels angeordnet sein, der sich über den gesamten Umfang des Mantels erstreckt. Der Ventilteller kann an einem Ende beispielsweise einen verringerten Querschnitt aufweisen, weil beispielsweise ein Vorsprung nach radial innen hervorsteht, der beim Schließen des Ventils mit dem tellerförmigen Anteil des Ventilsitzes in Kontakt kommt.

Die in Verschieberichtung projizierte Fläche des Ventiltellers, auf die der hydrostatische Druck in Verschieberichtung wirkt, wird daher im Wesentlichen bestimmt durch den Bereich des Mantels, der umgeschlagen ist. Geht man von einem U-förmigen Querschnitt aus, entspricht dies dem gebogenen Teil des U zwischen den beiden Schenkeln. Hat der Mantel über seine Länge ansonsten einen konstanten Querschnitt ist diese in Verschieberichtung projizierte Fläche ausschließlich dieser Anteil des Mantels.

Vorzugsweise verjüngt sich der Mantel in Verschieberichtung. Auf diese Weise kann einerseits erreicht werden, dass der erste Kontaktbereich und der zweite Kontaktbereich den gleichen Durchmesser aufweisen. Beide sind vorteilhafterweise kreisförmig ausgebildet. Die Verjüngung des Mantels erfolgt dabei vorzugsweise in Richtung auf die Schließstellung des Ventiltellers. Der Mantel hat in diesem Fall folglich im Bereich des zweiten Kontaktbereiches den kleinsten Durchmesser, der sich entlang der Verschieberichtung vergrößert bis er die maximale Weite aufweist, die vorzugsweise direkt am umgeschlagenen Ende des Mantels erreicht wird. Durch diese Verjüngung oder in entgegengesetzter Richtung gesehene Erweiterung des Querschnittes wird die in Verschieberichtung projizierte Fläche, auf die der hydrostatische Druck in Verschieberichtung wirkt, weiter reduziert. Da es sich ausgehend von dem zweiten Kontaktbereich um eine Querschnittserweiterung, also eine Art Überhang, handelt, wirkt auf diesen Bereich und auf den umgeschlagenen Bereich des Mantels der hydrostatische Druck in genau entgegen gesetzte Richtungen, so dass er zumindest teilweise, vorteilhafterweise jedoch vollständig, kompensiert wird.

Wird der Mantel in dieser Ausgestaltung in Verschieberichtung auf die Schließstellung zubewegt, kommt der erste Kontaktbereich mit dem ersten tellerförmigen Anteil und der zweite Kontaktbereich mit dem zweiten ringförmigen Anteil des Ventilsitzes in Kontakt. Dabei nähern sich die beiden Kontaktbereiche von der gleichen Richtung her ihrem jeweiligen Anteil des Ventilsitzes.

Vorteilhafterweise verfügt der Mantel über wenigstens einen in Verschieberichtung elastischen Bereich, insbesondere in Form eines Faltenbalges, wobei sich dieser elastische Bereich vorzugsweise an dem nach innen umgeschlagenen Ende des Mantels befindet. Alternativ oder zusätzlich dazu ist ein in Verschieberichtung elastischer Bereich an dem äußeren Teil des Mantels angeordnet.

Beim Schließen des Ventils kommt der erste Kontaktbereich mit dem ersten tellerförmigen Anteil und der zweite Kontaktbereich mit dem zweiten ringförmigen Anteil in Kontakt. Um hier Fertigungstoleranzen, Ungenauigkeiten oder sonstige Abweichungen von der exakten Form des Ventiltellers und/oder des Ventilsitzes auszugleichen, ist der in Verschieberichtung elastische Bereich vorhanden. Besonders vorzugsweise ist der Bereich in Form eines Faltenbalges aus Stahl, bevorzugt Edelstahl, hergestellt. Auf diese Weise wird erreicht, dass auch bei tiefen und tiefsten Temperaturen, die bei der Verwendung verflüssigter Gase auftreten, eine Funktionsweise des Ventils gewährleistet bleibt.

Vorzugsweise ist der erste Anteil und der zweite Anteil des Ventilsitzes entlang der Verschieberichtung voneinander beabstandet.

Vorteilhafterweise weisen der erste Anteil und der zweite Anteil des Ventilsitzes den gleichen Außendurchmesser senkrecht zur Verschieberichtung auf.

Vorzugsweise ist das Tankventil ausgebildet, bei Temperaturen von unter -50°C, bevorzugt unter -100°C, besonders bevorzugt unter -160°C betrieben zu werden. Vorzugsweise verfügt das Tankventil über keine Weichdichtelemente in Form von Elastomeren, da diese bei den genannten Temperaturen nicht ihre Dichtwirkung entfalten.

Die Erfindung löst die gestellte Aufgabe zudem durch einen Tank für verflüssigte Gase, wobei der Tank wenigstens ein Tankvolumen und wenigstens eine Auslassleitung aufweist, und sich dadurch auszeichnet, dass an einem Ende der Auslassleitung, das sich innerhalb des Tankvolumens befindet, ein hier beschriebenes Tankventil angeordnet ist. Durch die Verwendung eines derartigen Tankventiles wird, wie bereits dargelegt, die auf den Ventilteller wirkende Kraft, die durch den hydrostatischen Druck hervorgerufen wird und den Ventilteller in die Schließstellung drückt, deutlich reduziert, so dass auch zum Öffnen des Tankventils eine deutlich geringe Kraft nötig ist.

Vorteilhafterweise ist der Ventilteller des Tankventils durch eine Zugeinrichtung verschiebbar, die an einem Dach des Tanks angeordnet ist. Dies ist prinzipiell aus dem Stand der Technik bekannt. Da durch die Verwendung der hier beschriebenen Tankventile die zum Öffnen des Ventils benötigte Kraft deutlich reduziert werden kann, kann auch das Dach des Tanks, das als Gegenlager für die zum Öffnen des Tankventils benötigte Kraft dient, leichter und damit kostengünstiger ausgebildet sein.

Die für die Dichtheit des Tankventils verantwortlichen Materialien, also insbesondere das Material der Kontaktbereiche des Ventiltellers und das Material der Anteile des Ventilsitzes, die mit den Kontaktbereichen in Kontakt kommen können, sind vorzugsweise metallisch, besonders bevorzugt aus Stahl, insbesondere Edelstahl. Es sind aber auch elastische Elemente denkbar, solange die Materialien bei den zu erwartenden Temperaturen die gewünschte Dichtheit gewährleisten.

Mit Hilfe der beiliegenden Figuren werden nachfolgend zwei Ausführungsbeispiele der vorliegenden Erfindung näher erläutert. Es zeigen:
- Figuren 1 bis 3 -: die schematische Schnittdarstellung durch ein Ventil gemäß einem ersten Ausführungsbeispiel der vorliegenden Erfindung in unterschiedlichen Positionen und
- Figuren 4 bis 6 -: die schematische Schnittdarstellungen aus den Figuren 1 bis 3 für ein Ventil gemäß einem zweiten Ausführungsbeispiel der vorliegenden Erfindung.

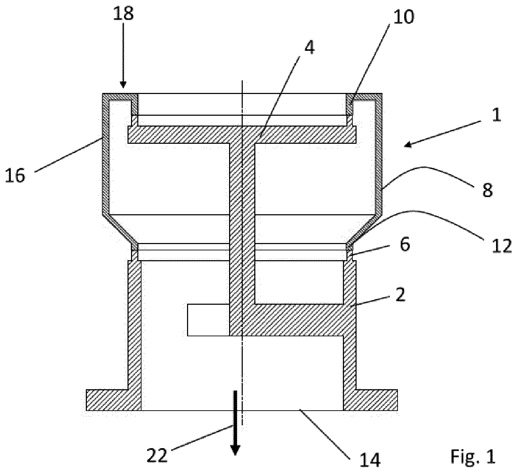

Figur 1 zeigt die schematische Schnittdarstellung durch ein Tankventil 1 gemäß einem ersten Ausführungsbeispiel der vorliegenden Erfindung. Es verfügt über einen Ventilsitz 2, der einen ersten tellerförmigen Anteil 4 und einen zweiten ringförmigen Anteil 6 aufweist. Das Tankventil 1 verfügt zudem über einen Ventilteller 8, der über einen ersten Kontaktbereich 10 und einen zweiten Kontaktbereich 12 verfügt.

In Figur 1 ist das Tankventil 1 in der geschlossenen Position dargestellt. Der erste Kontaktbereich 10 liegt am ersten Anteil 4 des Ventilsitzes 2 an und der zweite Anteil 12 des Ventiltellers 8 liegt am zweiten Anteil 6 des Ventilsitzes 2 an. Das Ventil ist geschlossen. Eine Auslassöffnung 14, durch die ein Medium bei geöffnetem Ventil in Richtung des Pfeiles 22 durch das Ventil hindurchströmen kann, ist nach oben hin vollständig geschlossen.

Der Ventilteller 8 verfügt über einen Mantel 16, der den ersten Kontaktbereich 10 und den zweiten Kontaktbereich 12 miteinander verbindet und im oberen Bereich ein nach innen umgeschlagenes Ende 18 aufweist. An diesem nach innen umgeschlagenen Ende befindet sich der erste Kontaktbereich 10.

Wird das Tankventil 1 in einen Tank eingebaut, wirkt in der Regel von oben der Druck des sich im Tank befindenden flüssigen Gases, gegen den Tankventile aus dem Stand der Technik geöffnet werden müssen. Anders als bei Ventilen aus dem Stand der Technik drückt beim Tankventil 1 der vorliegenden Erfindung der Druck des flüssigen Gases im Wesentlichen auf den ersten Anteil 4 des Ventilsitzes. Nur auf den umgeschlagenen Anteil des umgeschlagenen Endes 18 wirkt der Druck von oben.

Bei der in den Figuren 1 bis 3 gezeigten Ausführungsform des Tankventils 1 verfügt der Mantel 16 über eine Verjüngung zum ersten Kontaktbereich 12 hin. Die in Richtung der Verschiebung des Ventiltellers 8 von der Schließstellung in die Durchflussrichtung projizierte Fläche des Ventiltellers 8 weist folglich zwei Anteile auf. Dies ist einerseits der Anteil, der durch das Umschlagen des Mantels 8 in den Figuren 1 bis 3 oben erzeugt wird. Andererseits ist dies der durch die Querschnittsverjüngung des Mantels 8 hervorgerufene Anteil. Da die vom hydrostatischen Druck auf diese Flächenanteile in Richtung der Verschieberichtung wirkenden Flächen einmal nach unten und einmal nach oben wirken, heben sie sich gegenseitig zumindest teilweise, im gezeigten Ausführungsbeispiel sogar vollständig auf.

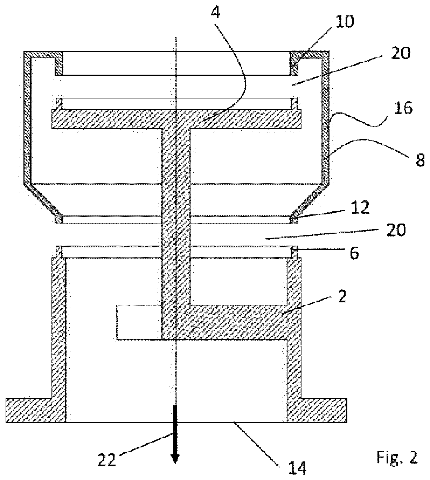

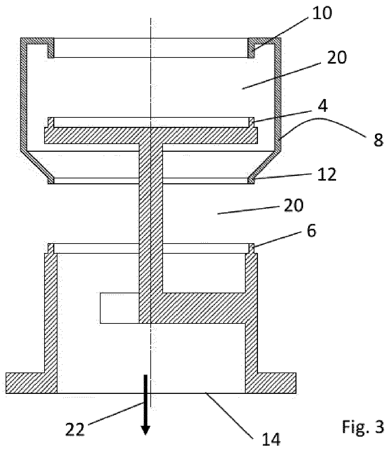

Figur 2 zeigt das Ventil aus Figur 1 in leicht geöffneter Stellung. Man erkennt zwischen dem ersten Anteil 4 des Ventilsitzes 2 und dem ersten Kontaktbereich 10 des Ventiltellers 8 sowie zwischen dem zweiten Anteil 6 des Ventilsitzes 2 und dem zweiten Kontaktbereich 12 des Ventiltellers 8 jeweils einen Spalt 20, durch den Medium in das Ventil eintreten kann, das das Ventil dann durch die Auslassöffnung 14 entlang des Pfeiles 22 verlässt. Man erkennt, dass der Ventilteller 8 in den gezeigten Darstellungen nach oben verschoben wird, um das Ventil zu öffnen. Die größte mit Druck beaufschlagte Fläche des Ventiltellers 8 ist der Mantel 16, der sich jedoch parallel zur Verschieberichtung erstreckt. Der auf den Mantel 16 wirkende Druck wirkt folglich senkrecht zur Verschieberichtung und beeinträchtigt das Verschieben kaum. Figur 3 zeigt das Ventil in der vollständig geöffneten Position.

In den Figuren 1 bis 3 ist der erste Kontaktbereich 10 sowie der zweite Kontaktbereich 12 jeweils ringförmig ausgebildet, wobei die beiden Kontaktbereiche 10, 12 über den gleichen Durchmesser verfügen. Dies ist in dem in den Darstellungen 4 bis 6 gezeigten Ventil anders. Der Mantel 16 des Ventiltellers 8 erstreckt sich in den gezeigten Ausführungen senkrecht nach oben und verfügt nicht über den Überhang des Ventiltellers 8 aus den Figuren 1 bis 3.

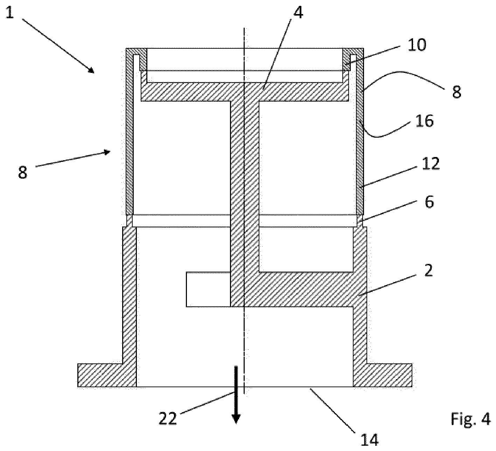

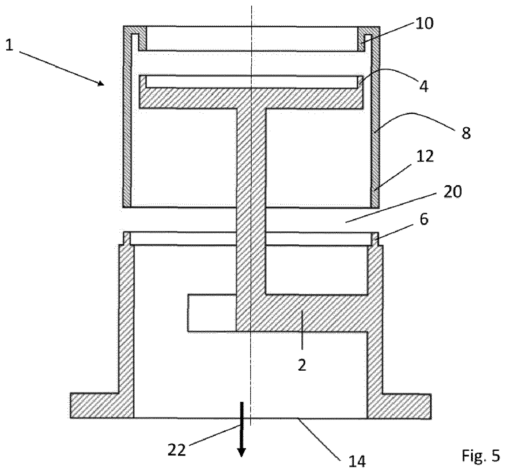

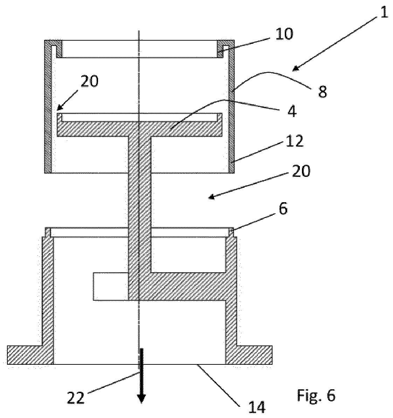

Die Figuren 5 und 6 zeigen das Ventil aus Figur 4 in einer leicht geöffneten und in der vollständig geöffneten Position.

### Bezugszeichenliste

- 1: Tankventil
- 2: Ventilsitz
- 4: erster tellerförmiger Anteil
- 6: zweiten ringförmigen Anteil
- 8: Ventilteller
- 10: erster Kontaktbereich
- 12: zweiter Kontaktbereich
- 14: Auslassöffnung
- 16: Mantel
- 18: umgeschlagenes Ende
- 20: Spalt
- 22: Pfeil

## Patentansprüche

1. Tankventil (1) mit
- einem Ventilsitz (2) und
- einem Ventilteller (8), der relativ zu dem Ventilsitz (2) entlang einer Verschieberichtung in eine Schließstellung, in der das Tankventil (1) geschlossen ist, und in eine Durchflussstellung verschiebbar ist,
**dadurch gekennzeichnet, dass**
- der Ventilsitz (2) einen ersten tellerförmigen Anteil (4) und einen zweiten ringförmigen Anteil (6) aufweist und
- der Ventilteller (8) einen ersten Kontaktbereich (10), der in der Schließstellung mit dem ersten Anteil (4) entlang einer geschlossenen Kontur, und einen zweiten Kontaktbereich (12) aufweist, der in der Schließstellung mit dem zweiten Anteil (6) des Ventilsitzes (2) in Kontakt ist, wobei der Ventilteller (8) nicht tellerförmig ausgebildet ist und einen rohrförmigen Mantel (16) aufweist, der den ersten Kontaktbereich (10) mit dem zweiten Kontaktbereich (12) verbindet,
- wobei der Mantel einen U-förmigen Querschnitt mit einem radial inneren Schenkel , an dessen Ende der erste Kontaktbereich angeordnet ist, und einem radial äußeren Schenkel aufweist, der länger als der radial innere Schenkel ist und an dessen Ende der zweite Kontaktbereich angeordnet ist.

2. Tankventil (1) nach Anspruch 1, **dadurch gekennzeichnet, dass** der Mantel (16) sich in Verschieberichtung verjüngt.

3. Tankventil (1) nach Anspruch 1 oder 2, **dadurch gekennzeichnet, dass** der Mantel (16) wenigstens einen in Verschieberichtung elastischen Bereich, insbesondere in Form eines Faltenbalges, aufweist.

4. Tankventil (1) nach Anspruch 3, **dadurch gekennzeichnet, dass** sich der elastische Bereich an dem nach innen umgeschlagenen Ende (18) des Mantels (16) befindet.

5. Tankventil (1) nach einem der vorstehenden Ansprüche, **dadurch gekennzeichnet, dass** der erste Anteil (4) und der zweite Anteil (6) des Ventilsitzes (2) entlang der Verschieberichtung voneinander beabstandet sind.

6. Tankventil (1) nach einem der vorstehenden Ansprüche, **dadurch gekennzeichnet, dass** der erste Anteil (4) und der zweite Anteil (6) des Ventilsitzes (2) den gleichen Außendurchmesser senkrecht zur Verschieberichtung aufweisen.

7. Tankventil (1) nach einem der vorstehenden Ansprüche, **dadurch gekennzeichnet, dass** das Tankventil (1) ausgebildet ist, bei Temperaturen von unter -50°C, bevorzugt unter -100°C, besonders bevorzugt unter -160°C betrieben zu werden.

8. Tank für verflüssigte Gase, wobei der Tank
- wenigstens ein Tankvolumen und
- wenigstens eine Auslassleitung aufweist,
**dadurch gekennzeichnet, dass** an einem Ende der Auslassleitung, das sich innerhalb des Tankvolumens befindet, ein Tankventil (1) nach einem der vorstehenden Ansprüche angeordnet ist.

9. Tank nach Anspruch 8,
**dadurch gekennzeichnet, dass** der Ventilteller (8) des
Tankventils (1) durch eine Zugeinrichtung, die an einem Dach des Tankes angeordnet ist, verschiebbar ist.

## Claims

1. A tank valve (1) with
- a valve seat (2) and
- a valve disc (8), which can be displaced relative to the valve seat (2) along a displacement direction into a closed position, in which the tank valve (1) is closed, and into a through-flow position.
**characterized in that**
- the valve seat (2) comprises a first plate-shaped part (4) and a second ring-shaped part (6), and
- the valve disc (8) comprises a first contact area (10), which is in contact with the first part (4) along a closed contour when in the closed position, and a second contact area (12), which is in contact with the second part (6) of the valve seat (2) when in the closed position, wherein the valve disc (8) is designed to be non-plate-shaped and comprises a tubular casing (16), which connects the first contact area (10) with the second contact area (12),
- wherein the casing has a U-shaped cross-section with a radially inner limb, at the end of which the first contact area is arranged, and a radially outer limb, which is longer than the radially inner limb and at the end of which the second contact area is arranged.

2. The tank valve (1) according to claim 1, **characterized in that** the casing (16) tapers in the direction of displacement.

3. The tank valve (1) according to claim 1 or 2, **characterized in that** the casing (16) has at least one elastic area in the direction of displacement, in particular in the form of bellows.

4. The tank valve (1) according to claim 3, **characterized in that** the elastic area is situated at the inwardly folded end (18) of the casing (16).

5. The tank valve (1) according to one of the above claims, **characterized in that** the first part (4) and the second part (6) of the valve seat (2) are situated at a distance from one another along the direction of displacement.

6. The tank valve (1) according to one of the above claims, **characterized in that** the first part (4) and the second part (6) of the valve seat (2) have the same outer diameter perpendicular to the direction of displacement.

7. The tank valve (1) according to one of the above claims, **characterized in that** the tank valve (1) is designed to be operated at temperatures of below -50°C, preferably below -100°C, especially preferably below -160°C.

8. A tank for liquefied gases, wherein the tank comprises
- at least one tank volume and
- at least one discharge pipe,
**characterized in that** a tank valve (1) according to one of the above claims is arranged at one end of the discharge pipe, which is situated inside the tank volume.

9. The tank according to claim 8, **characterized in that** the valve disc (8) of the tank valve (1) can be displaced by a traction device, which is arranged on a roof of the tank.

## Revendications

1. Soupape de réservoir (1) comprenant
- un siège de soupape (2) et
- une tête de soupape (8) susceptible d'être déplacée par rapport au siège de soupape (2) le long d'une direction de déplacement jusque dans une position de fermeture, dans laquelle la soupape de réservoir (1) est fermée, et jusque dans une position d'écoulement,
**caractérisée en ce que**
- le siège de soupape (2) comprend une première partie (4) en forme de disque et une deuxième partie (6) en forme d'anneau, et
- la tête de soupape (8) présente une première zone de contact (10) qui, dans la position de fermeture, est en contact avec la première partie (4) le long d'un contour fermé, et une deuxième zone de contact (12) qui, dans la position de fermeture, est en contact avec la deuxième partie (6) du siège de soupape (2), la tête de soupape (8) n'est pas réalisée en forme de disque et présentant une enveloppe tubulaire (16) qui relie la première zone de contact (10) à la deuxième zone de contact (12),
- l'enveloppe présentant une section transversale en forme de U ayant une branche radialement intérieure à l'extrémité de laquelle est disposée la première zone de contact, et une branche radialement extérieure qui est plus longue que la branche radialement intérieure et à l'extrémité de laquelle est disposée la deuxième zone de contact.

2. Soupape de réservoir (1) selon la revendication 1,
**caractérisée en ce que** l'enveloppe (16) va en se rétrécissant dans la direction de déplacement.

3. Soupape de réservoir (1) selon la revendication 1 ou 2,
**caractérisée en ce que** l'enveloppe (16) présente au moins une zone qui est élastique dans la direction de déplacement, en particulier sous la forme d'un soufflet.

4. Soupape de réservoir (1) selon la revendication 3,
**caractérisée en ce que** la zone élastique se trouve à l'extrémité (18) de l'enveloppe (16) rabattue vers l'intérieur.

5. Soupape de réservoir (1) selon l'une des revendications précédentes,
**caractérisée en ce que** la première partie (4) et la deuxième partie (6) du siège de soupape (2) sont espacées l'une de l'autre le long de la direction de déplacement.

6. Soupape de réservoir (1) selon l'une des revendications précédentes,
**caractérisée en ce que** la première partie (4) et la deuxième partie (6) du siège de soupape (2) ont le même diamètre extérieur perpendiculairement à la direction de déplacement.

7. Soupape de réservoir (1) selon l'une des revendications précédentes,
**caractérisée en ce que** la soupape de réservoir (1) est conçue pour fonctionner à des températures inférieures à -50 °C, de préférence inférieures à -100 °C, de manière particulièrement préférée inférieures à -160 °C.

8. Réservoir pour gaz liquéfiés, le réservoir comprenant
- au moins un volume de réservoir et
- au moins un conduit de sortie,
**caractérisé en ce qu'**une soupape de réservoir (1) selon l'une des revendications précédentes est disposée à une extrémité du conduit de sortie, laquelle se trouve à l'intérieur du volume de réservoir.

9. Réservoir selon la revendication 8,
**caractérisé en ce que** la tête de soupape (8) de la soupape de réservoir (1) est susceptible d'être déplacée par un dispositif de traction qui est disposé sur un toit du réservoir.
